Europäisches Patentamt

European Patent Office

Office européen des brevets

(11) Publication number: **0 314 420**
**A1**

# EUROPEAN PATENT APPLICATION

(21) Application number: 88309991.3

(22) Date of filing: 24.10.88

(51) Int. Cl.4: **F 16 D 35/00**
**B 60 K 17/35**

(30) Priority: 24.10.87 JP 269086/87
11.05.88 JP 114406/88

(43) Date of publication of application:
03.05.89 Bulletin 89/18

(84) Designated Contracting States: DE FR GB

(71) Applicant: **TOYOTA JIDOSHA KABUSHIKI KAISHA**
**1, Toyota-cho Toyota-shi**
**Aichi-ken 471 (JP)**

(72) Inventor: **Murata, Kiyohito**
**c/o Toyota Jidosha Kabushiki Kaisha 1, Toyota-cho**
**Toyota-shi Aichi-ken (JP)**

**Azuma, Hitoshi**
**c/o Toyota Jidosha Kabushiki Kaisha 1, Toyota-cho**
**Toyota-shi Aichi-ken (JP)**

(74) Representative: **Ben-Nathan, Laurence Albert et al**
**Urquhart-Dykes & Lord 91 Wimpole Street**
**London W1M 8AH (GB)**

(54) Viscous clutch assembly for torque transmission in motor vehicle.

(57) A viscous clutch assembly adapted for installation in a torque transmission mechanism for effecting a drive connection between a pair of rotary members coaxially arranged for relative rotation. The viscous clutch assembly includes a viscous coupling (10a) arranged for generating a viscous resistance force in response to relative rotation between the rotary members, a cam mechanism (10c) cooperable with the viscous coupling for converting the viscous resistance force into a thrust force, and a friction disc clutch (10b) arranged for generating a frictional engagement force in response to the thrust force applied thereto from the cam mechanism for establishing the drive connection between the rotary members.

Fig. 2

EP 0 314 420 A1

**Description**

# VISCOUS CLUTCH ASSEMBLY FOR TORQUE TRANSMISSION IN MOTOR VEHICLE

The present invention relates to a viscous clutch or coupling assembly adapted for installation in torque transmission mechanisms in a motor vehicle for effecting a drive connection between a pair of rotary members coaxially arranged for relative rotation.

Conventional viscous coupling assemblies of this kind are in general classified into two types. A viscous coupling assembly of the first type is adapted to automatically effect torque transmission between drive and driven rotary members in response to relative rotation thereof. A viscous coupling assembly of the second type is adapted as a limited-slip differential to restrict relative rotation between drive and driven rotary members, between a pair of drive rotary members or between a pair of driven rotary members. The coupling assembly of the first type is mainly installed in one of torque transmission systems in a four-wheel drive vehicle of the real-time type. The coupling assembly of the second type is mainly installed in a differential unit.

In Japanese Patent Early Publication No. 61-501583, there is disclosed a viscous coupling assembly in which a first set of coupling plates are interleaved with a second set of coupling plates to produce a viscous frictional torque when engaged by a shearing force of viscous fluid between the coupling plates. However, the viscous frictional torque is not so large and increases progressively at the initial stage in operation. In the case that the viscous coupling assembly is constructed to produce a large viscous frictional torque, the shearing force of viscous fluid increases to significantly rise the temperature of the viscous fluid during operation, resulting in a decrease of the fluid viscosity. As a result, the viscous frictional torque fluctuates to render the torque transmission between the coupling plates unstable, and hysteresis in the torque transmission will occur if a differecne in speed between the coupling plates progressively decreases after it has been progressively increased. It is, therefore, apparent that installation of the viscous coupling assembly in one of torque transmission systems in a four-wheel drive vehicle or in a differential unit will cause unstable torque transmission in the system or unstable limited slip condition in the differential unit.

In Japanese Patent Early Publication No. 61-102330, there is disclosed a multiple friction disc clutch assembly in which the friction discs are arranged to be brought into frictional engagement by hydraulic fluid under pressure applied thereto from a hydraulic fluid pump. The fluid pump is arranged to be driven in accordance with a difference in rotation between a pair of rotary members for applying the hydraulic fluid under pressure to the friction discs. In such arrangement of the clutch assembly, the transmission torque between the rotary members becomes small when the discharge pressure of the fluid pump is maintained at a low level due to a small difference in rotation between the rotary members. To effect a predetermined torque transmission even when the difference in rotation between the rotary members is small, the friction discs in the clutch assembly are preliminarily engaged under load of a spring applied thereto. Such preliminary engagement of the friction discs will cause defacement of the discs in a short period of time.

In Japanese Utility Model Early Publication No. 61-141848, there is disclosed a viscous clutch assembly which includes thrust means for effecting frictional engagement of a viscous fluid coupling in accordance with a difference in rotation between a pair of rotary members. In operation, the viscous fluid coupling acts as a limited slip differential to produce a viscous frictional torque when the difference in rotation between the rotary members is small and to produce a frictional engagement torque under control of the thrust means in accordance with an increase of the difference in rotation between the rotary members. During such operation of the fluid coupling, the fluid viscosity will decrease due to the heat caused by shearing of the viscous fluid between the coupling plates. This renders the torque transmitting capability of the clutch assembly unstable. When the coupling plates are frictionally brought into engagement by progressive increase of the difference in rotation between the rotary members, a hump phenomenon will occur to cause a sudden increase of the transmitting torque.

It is therefore, an object of the present invention to provide an improved viscous clutch assembly capable of producing a transmitting torque in proportion to the difference in rotation between the rotary members without any influence caused by change of the fluid viscosity.

According to the present invention, the object is attained by providing a viscous coupling assembly adapted for installation in a torque transmission mechanism for effecting a drive connection between a pair of rotary members coaxially arranged for relative rotation, which comprises first means for generating a viscous resistance force in response to relative rotation of the rotary members, second means cooperable with the first means for converting the viscous resistance force into a thrust force, and third means for generating a frictional engagement force in response to the thrust force applied thereto from said second means for effecting the drive connection between the rotary members.

In a preferred embodiment of the present invention, the first means is in the form of a viscous coupling including a rotary plate arranged for rotation with one of the rotary members and a first cam member rotatable with the other rotary member, the rotary plate being formed at one side thereof with a first set of concentrically spaced annular ribs which are coupled with a second set of concentrically spaced annular ribs formed on one side of the first cam member through a predetermined quantity of viscous fluid, the second means is in the form of a cam mechanism including a second cam member arranged for rotation with the other rotary member and cooperable with the first cam member for generating a thrust force in response to relative rotation to the first cam member caused by a viscous resistance force acting thereon during relative rotation between the rotary plate and the first cam member, and the third means is in the form of a multiple friction disc clutch including a first set of clutch discs arranged for rotation with the one of the rotary members and a second set of clutch discs arranged for rotation with the other rotary member and interleaved with the first set of clutch discs to be brought into frictional engagement with the latter in response to the thrust force applied thereto from the second cam member of the cam mechanism.

In another preferred embodiment of the present invention, the first means is a viscous coupling including an outer cylindrical drum arranged for rotation with one of the rotary members, an inner sleeve member rotatably coupled with the drum to form a viscous fluid chamber, a first set of coupling plates arranged for rotation with the drum in the viscous fluid chamber, and a second set of coupling plates arranged for rotation with the inner sleeve member and interleaved with the first set of coupling plates through a predetermined quantity of viscous fluid in the chamber, the second means is a cam mechanism including a first cam member coupled with the inner sleeve member for rotation therewith and a second cam member arranged for rotation with the other rotary member and rotatably coupled with the first cam member for generating a thrust force in response to relative rotation to the first cam member caused by a viscous resistance force acting thereon during relative rotation between the drum and the inner sleeve member, and the third means is a multiple friction disc clutch including a first set of clutch discs arranged for rotation with the one of the rotary members and a second set of clutch discs arranged for rotation with the other rotary member and interleaved with the first set of clutch discs to be brought into frictional engagement with the latter in response to the thrust force applied thereto from the second cam member of the cam mechanism.

For a better understanding of the present invention, and to show how the same may be carried into effect, reference will now be made, by way of example, to the accompanying drawings, in which:

Fig. 1 is a schematic plan view of the arrangement of a four-wheel drive vehicle system incorporating a viscous clutch assembly of the present invention;

Fig. 2 is a sectional view of the viscous clutch assembly shown in Fig. 1;

Figs. 3 (a), (b) and (c) each are an enlarged sectional view illustrating the operation of a cam mechanism in the viscous clutch assembly;

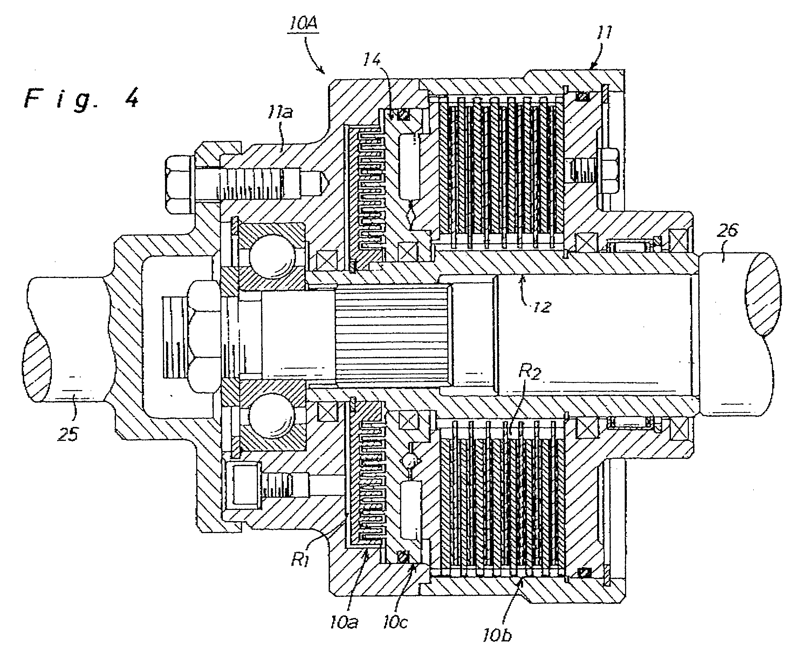

Fig. 4 is a sectional view of a modification of the viscous clutch assembly;

Fig. 5 is a sectional view of a differential unit incorporating another viscous clutch assembly of the present invention;

Fig. 6 is an enlarged sectional view of the viscous clutch assembly shown in Fig. 5;

Fig. 7 (a) is a side view of a cam element shown in Fig. 6;

Fig. 7 (b) is a partial front view of the cam element;

Fig. 8 is a sectional view of a modification of the viscous clutch assembly shown in Fig. 6; and

Fig. 9 is a sectional view of another modification of the viscous clutch assembly shown in Fig. 6.

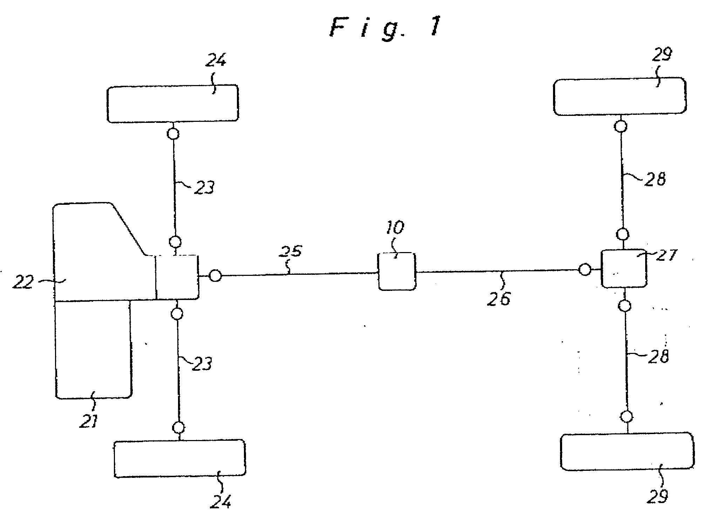

Fig. 1 of the drawings diagrammatically discloses a layout of a four-wheel drive vehicle of the real-time type the rear wheel drive system of which includes a viscous clutch assembly 10 of the present invention. The vehicle has a transversely mounted front engine 21 and a transaxle transmission unit 22 secured to one side of the engine 21. The transaxle transmission unit 22 includes a power transmission having an input shaft (not shown) drivingly connected to an output shaft of the engine 21 through a clutch mechanism (not shown) and a power transfer device arranged to transfer the power from the power transmission to a pair of front axle shafts 23 and to a first longitudinal front-to-rear propeller drive shaft 25. The front axle shafts 23 are connected at their outer ends to a pair of front drive wheels 24, while the propeller drive shaft 25 is drivingly connected to a second longitudinal front-to-rear propeller drive shaft 26 by means of the viscous clutch assembly 10 of the present invention. The second propeller drive shaft 26 is connected by universal joint means to a rear differential indicated at 27. The rear differential 27 is connected to rear axle shafts 28 to provide conventional differential action between a pair of rear drive wheels 29.

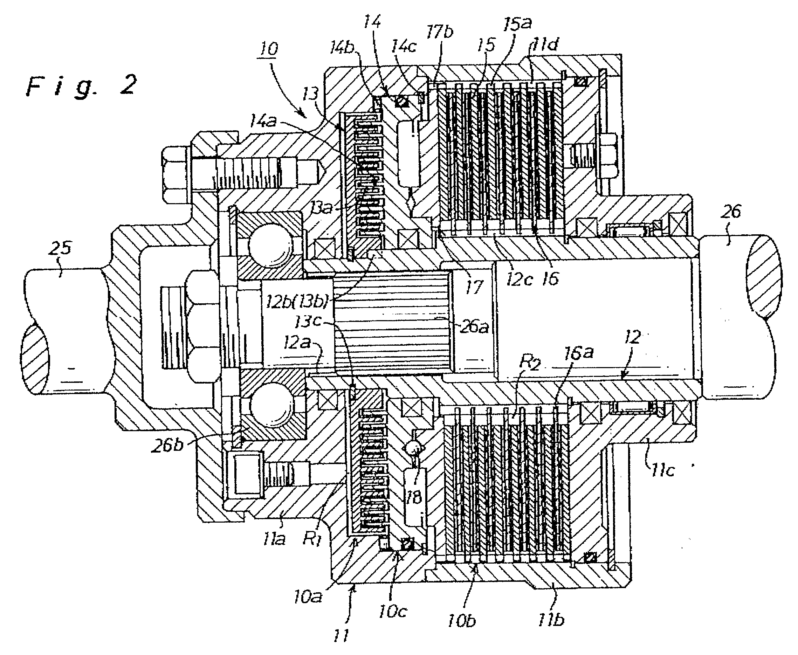

As shown in Fig. 2, the viscous clutch assembly 10 includes a three-part outer casing 11 coupled over an inner sleeve member 12 to contain therein means 10a for generating a viscous resistance force, means 10b for generating a frictional engagement force and means 10c for generating a thrust force. The outer casing 11 has a cup-shaped portion 11a, a cylindrical drum portion 11b coupled over and secured to an annular stepped end of the cup-shaped portion 11a, and an end wall portion 11c coupled within the right end of drum portion 11b in a liquid-tight manner. The inner sleeve member 12 is rotatably supported in the outer casing 11 through suitable seals to form a sealed chamber in outer casing 11. The inner sleeve member 12 has an internally splined portion 12a coupled over an externally splined portion 26a of the second front-to-rear propeller drive shaft 26 for rotation therewith. The cup-shaped portion 11a of casing 11 is rotatably supported on the forward end of propeller drive shaft 26 through a ball bearing 26b and joined to the rearward end of the first front-to-rear propeller drive shaft 25 by means of a plurality of bolts.

The means 10a for generating the viscous resistance force is in the form of a viscous coupling which includes a rotary plate 13 mounted on the inner sleeve member 12 for rotation therewith and a first cam member 14 rotatably mounted on the inner sleeve member 12 through an annular seal. The rotary plate 13 is formed at its right side with a first set of concentrically spaced annular ribs 13a and at its inner periphery with a radial recess 13b which is engaged with a projection 12b of inner sleeve member 12. The rotary plate 13 is positioned in an axial direction by engagement with the projection 12b of inner sleeve member 12 at its radial recess 13b and fixed in position by a snap ring 13c. The first cam member 14 is formed at its left side with a second set of concentrically spaced annular ribs 14a which are coupled with the first set of annular ribs 13a with a predetermined space. The first cam member 14 is coupled within the cup-shaped portion 11a of casing 11 through an annular seal to form a viscous fluid chamber $R_1$. The first cam member 14 is rotatably supported on an internal stepped portion of casing 11 through a needle bearing 14b and is positioned in an axial direction by means of a snap ring 14c. The viscous fluid chamber $R_1$ is filled with a predetermined quantity of viscous fluid such as a silicone fluid.

The means 10b for generating the frictional engagement force is in the form of a multiple disc clutch of the wet type which includes a first set of clutch discs 15 arranged for rotation with the cylindrical drum portion 11b of casing 11 and a second set of clutch discs 16 arranged for rotation with the inner sleeve member 12. The first set of clutch discs 15 are formed at their outer periphery with splines 15a which are drivingly engaged with internal splines 11d formed on the inner surface of cylindrical drum portion 11b of casing 11. The second set of clutch discs 16 are formed at their inner periphery with splines 16a which are drivingly engaged with external splines 12c formed on the inner sleeve member 12. The clutch discs 15 are interleaved with the clutch discs 16 to be engaged with the latter. A chamber $R_2$ formed between the drum portion 11b of casing 11 and the inner sleeve member 12 is filled with a predetermined quantity of clutch fluid.

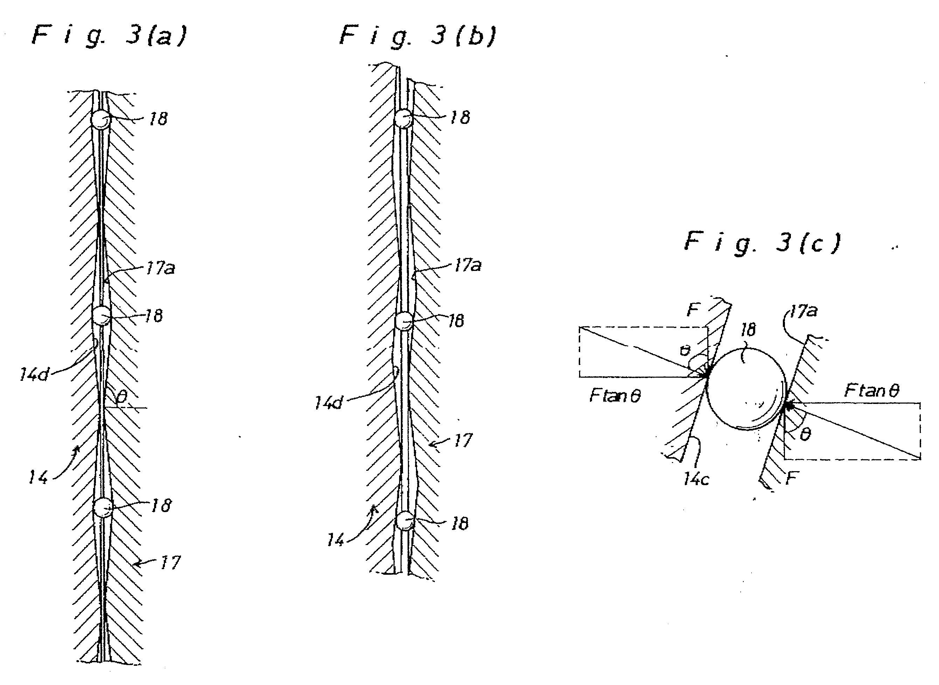

The means 10c for generating the thrust force is in the form of a cam mechanism which includes the first cam member 14, a second cam member 17 and a plurality of balls 18. The second cam member 17 is in the form of an annular thrust plate having external splines 17b which are drivingly engaged with the internal splines 11d of drum portion 11b of casing 11. The second cam member 17 is arranged adjacent the leftmost clutch disc 15 and is axially movable and rotatable with the drum portion 11b of casing 11. The second cam member 17 is rotatably coupled at its inner periphery with an annular boss of first cam member 14. As shown in Fig. 3 (a), the second cam member 17 is formed at its left side with an annular cam groove 17a which faces a corresponding annular cam groove 14d formed on the right side of first cam member 14. The annular cam grooves 14d and 17a each have a plurality of crests and roots with a cam pressure angle $\theta$. The balls 18 are each disposed in a space between the opposed roots of cam grooves 14d and 17a.

In operation, the outer casing 11 and cam members 14, 17 rotate with the first propeller drive shaft 25, while the inner sleeve member 12 and rotary plate 13 rotate with the second propeller drive shaft 26. When the first propeller drive shaft 25 rotates at a different speed then the second propeller drive shaft 26, relative rotation between the rotary plate 13 and the first cam member 14 will occur to generate a viscous frictional torque T as represented by the following equation.

$$T = K \cdot \frac{\mu \cdot N \cdot \ell}{h} \cdot \sum_{i=1}^{n} (ri)^3$$

where k is constant, $\mu$ is the fluid viscosity, N is the difference in rotation between drive shafts 25 and 26, $\ell$ is the axial length of opposed ribs 13a, 14a, h is the space between opposed ribs 13a, 14a, and ri is each radius of portions at which the viscous shearing force is generated.

The viscous frictional torque T acts as a resistance force on the first cam member 14 to restrict relative rotation between the rotary plate 13 and cam member 14, and a resistance force F at balls 18 is represented by T/R, where R is a radius of the orbital circle of balls 18. As shown in Fig. 3 (c), the resistance force F is converted into a thrust force S = Ftan $\theta$. Thus, as shown in Fig. 3 (b), the second cam member 17 is moved by the thrust force S applied thereto to bring the clutch discs 15 into frictional engagement with the clutch discs 16. As a result, a drive connection between the outer casing 11 and the inner sleeve member 12 is established to transfer the drive power from the first propeller drive shaft 25 to the second propeller drive shaft 26 thereby to effect the four-wheel drive mode of the vehicle. In this instance, the frictional engagement force between the clutch discs 15 and 16 will increase or decrease proportionally to the difference in rotation between the rotary plate 13 and cam member 14.

Although in the viscous clutch assembly 10 the multiple disc clutch 10b is heated by frictional engagement of the clutch discs 15 and 16, the heat transfer from the disc clutch 10b to the viscous fluid chamber $R_1$ is interrupted by the cam mechanism 10c, and the heat generated at the viscous coupling 10a is maintained at a low temperature. For this reason, the viscosity of fluid in chamber $R_1$ can be maintained in a desired value to ensure the torque transmitting capability of disc clutch 10b without casing any fluctuation in operation.

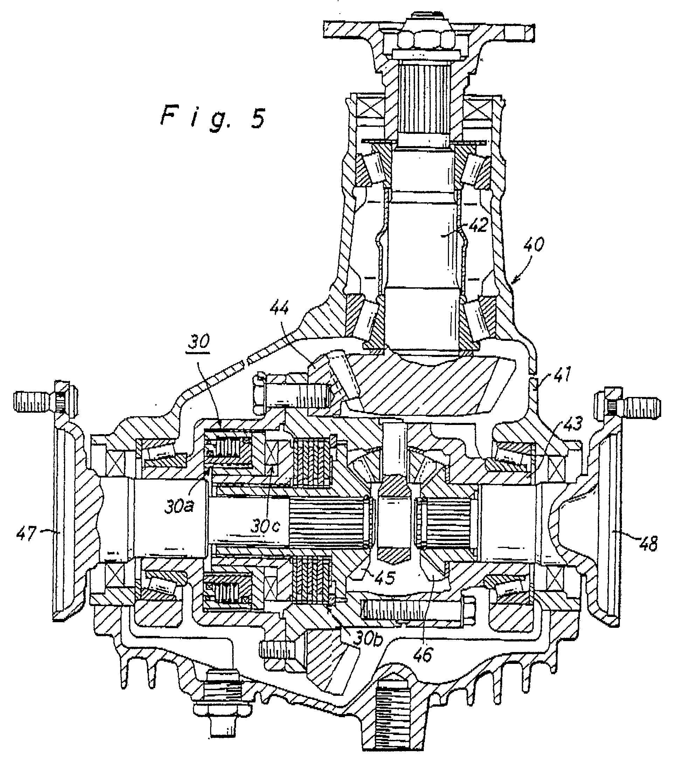

In Fig. 5, a modification of the above-described viscous clutch assembly 10 is indicated at 10A, wherein the first cam member 14 is supported in place by the viscous fluid filled in chamber $R_1$ without providing the needle bearing 14b and snap ring 14c shown in Fig. 2.

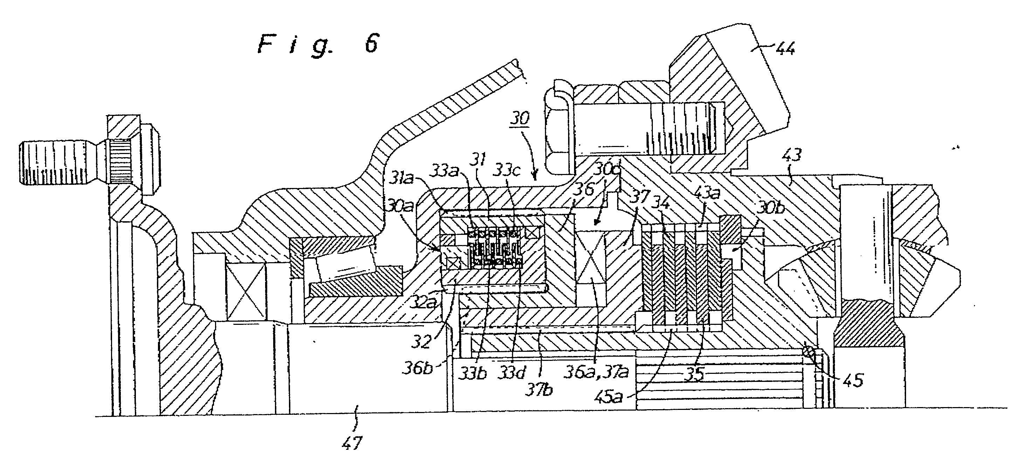

In Fig. 6 there is disclosed a differential unit 40 wherein another viscous clutch assembly 30 of the present invention is provided as a limited-slip differential. The differential unit 40 includes a differential carrier 41 formed to contain therein a drive pinion shaft 42 and a differential case 43. The drive pinion shaft 42 is supported by a pair of axially spaced tapered roller bearings in differential carrier 41 and is drivingly connected at its outer end to a propeller drive shaft (not shown). The differential case 43 is arranged to rotate about a lateral axis perpendicular to the axis of pinion shaft 42. The differential case 43 has a ring gear 44 fixed thereon and meshed with a pinion of drive shaft 42 to transmit therethrough the drive power from shaft 42 to a pair of side gears 45 and 46. The side gears 45 and 46 are rotatably mounted within the differential case 43 and connected to side gear shafts 47 and 48 for connection to a pair of rear drive wheels (not shown).

The viscous clutch assembly 30 is disposed in a space between the differential case 43 and the left-hand side gear 45 and includes a viscous coupling 30a, a multiple friction disc clutch 30b of the wet type and a cam mechanism 30c. As shown in Fig. 6, the viscous coupling 30a includes an outer cylindrical drum 31 arranged for rotation with the differential case 43, an inner sleeve member 32 rotatably coupled with the drum 31 in a liquid-tight manner to form a viscous fluid chamber, a first set of coupling plates 33a arranged for rotation with the drum 31, and a second set of coupling plates 33b arranged for rotation with the inner sleeve member 32. The first set of coupling plates 33a are formed at their outer periphery with splines which are drivingly engaged with internal splines formed on the inner surface of drum 31. The first set of coupling plates 33a are axially spaced by a plurality of annular springs 33c disposed therebetween. Similarly, the second set of coupling plates 33b are formed at their inner periphery with splines which are drivingly engaged with external splines formed on the inner sleeve member 32. The second set of coupling plates 33b are axially spaced by a plurality of annular springs 33d disposed therebetween and interleaved with the first set of coupling plates 33a. The viscous fluid chamber between the drum 31 and inner sleeve member 32 is filled with a predetermined quantity of vicous fluid. In the viscous coupling 30a, the drum 31 is formed at its outer periphery with external splines 31a which are drivingly engaged with an internally splined portion of differential case 43, and the inner sleeve member 32 is formed at its inner periphery with internal splines 32a which are drivingly engaged with an externallly splined sleeve portion 36b of a first cam member 36.

The multiple friction disc clutch 30b includes a first set of clutch discs 34 arranged for rotation with the differential case 43 and a second set of clutch discs 35 arranged for rotation with the left-hand side gear 45. The first set of clutch dics 34 are formed at their outer periphery with splines which are drivingly engaged with internal splines 43a formed on the inner surface of differential case 43. The second set of clutch discs 35 are formed at their inner periphery with splines which are drivingly engaged with external splines 45a formed a sleeve portion of the left-hand side gear 45. The clutch discs 35 are interleaved with the clutch discs 34 to be engaged with the latter.

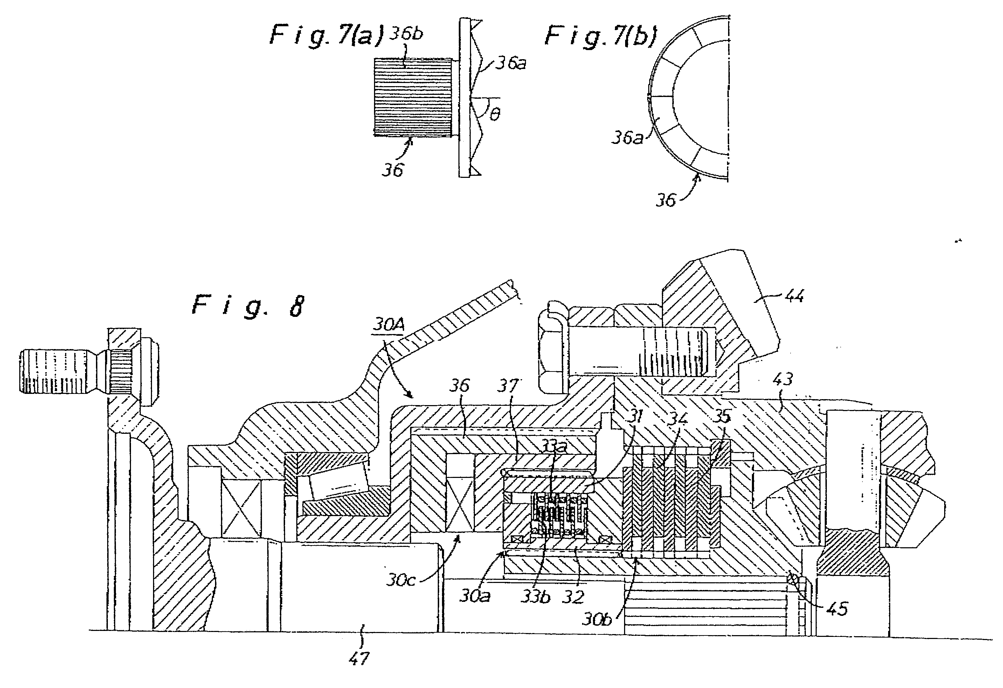

The cam mechanism 30c is composed of the first cam member 36 and a second cam member 37. As shown in Figs. 7 (a) and (b), the first cam member 36 has an annular flange portion formed with an annular cam surface 36a, while the second cam member 37 has an annular flange portion formed with an annular cam surface 37a which is engaged with the annular cam surface of first cam member 36. The second cam member 37 has an internally splined sleeve portion 37b which is axially slidably engaged with external splines formed on the sleeve portion of left-hand side gear 45. The first cam member 36 is rotatably and axially slidably coupled over the internally splined sleeve portion 37b of second cam member 37, and the annular flange of second cam member 37 is positioned adjacent the leftmost clutch dics 34.

In operation, the outer cylindrical drum 31 rotates with the differential case 43, while the inner sleeve member 32 and first and second cam members 36, 37 rotate with the left-hand side gear 45. When the side gear 45 rotates at a different speed than the side gear 46 to allow differentiation between the side gear shafts 47 and 48, relative rotation between the coupling plates 33a and 33b will occur to generate a viscous frictional torque T as represented by the following equation.

$$T = K \cdot \frac{\pi^2 \cdot \mu \cdot N}{h} \cdot (r_2^4 - r_1^4) \cdot n$$

where K is constant, $\mu$ is the fluid viscosity, N is the difference in rotation between coupling plates 33a and 33b, h is the space between coupling plates 33a and 33b, $r_2$ is the outer diameter of coupling plates 33b, $r_1$ is the inner diameter of coupling plates 33a, and n is the number of frictional surfaces.

The viscous frictional torque T acts as a resistance force on the first cam member 36 to restrict relative rotation of the first cam member 36 to the drum 31, and a resistance force F is represented by T/R, where R is a radius of the cam action part. In this instance, the cam mechanism 30c acts to convert the resistance force F into a thrust force S = F tan $\theta$, where $\theta$ is the cam pressure angle of the cam surfaces 36a, 37a. Thus, the second cam member 37 is moved by the thrust force S applied thereto to bring the clutch discs 34 into frictional engagement with the clutch discs 35. As a result, the frictional engagement force between the clutch discs 34 and 35 acts as a limited-slip differential torque between the differential case 43 and side gear 45. In addition, the frictional engagement force between the clutch discs 34 and 35 will increase or decrease proportionally to the difference in rotation between the differential case 43 and side gear 45.

In Fig. 8, a modification of the viscous clutch assembly 30 is indicated at 30A, wherein the viscous coupling 30a is disposed between the multiple friction disc clutch 30b and the cam mechanism 30c. In this modification, the inner sleeve member 32 of viscous coupling 30a is splined at its inner periphery to the externally splined sleeve portion of left-hand side gear 45 for rotation therewith, the first cam member 36 of cam mechanism 30c is splined at its outer periphery to the internally splined portion of differential case 43 for rotation therewith, and the second cam member 37 is rotatably coupled within the sleeve portion of first cam member 36 and splined at its inner periphery to the outer cylindrical drum 31 for rotation therewith. The outer construction and component parts are substantially as those int he viscous clutch assembly 30 shown in Fig. 6.

In operation, the cam members 36, 37 and drum 31 rotated with the differential case 43, while the inner sleeve member 32 rotates with the left-hand side gear 45. When the side gear 45 rotates at a different speed than the side gear 46 to allow differentiation between the side gear shafts 47 and 48, relative rotation between the coupling plates 33a and 33b will occur to generate a viscous frictional torque. The viscous frictional torque acts as a resistance force on the second cam member 37 to cause relative rotation between the cam members 36 and 37. In this instance, the cam mechanism 30c acts to convert the resistance force into a thrust force. Thus, the drum 31 of viscous coupling 30a is moved by the thrust force applied thereto through the second cam member 37 to bring the clutch discs 34 into frictional engagement with the clutch discs 35. As a result, the frictional engagement force between the clutch discs 34 and 35 acts as a limited-slip differential torque between the differential case 43 and side gear 45.

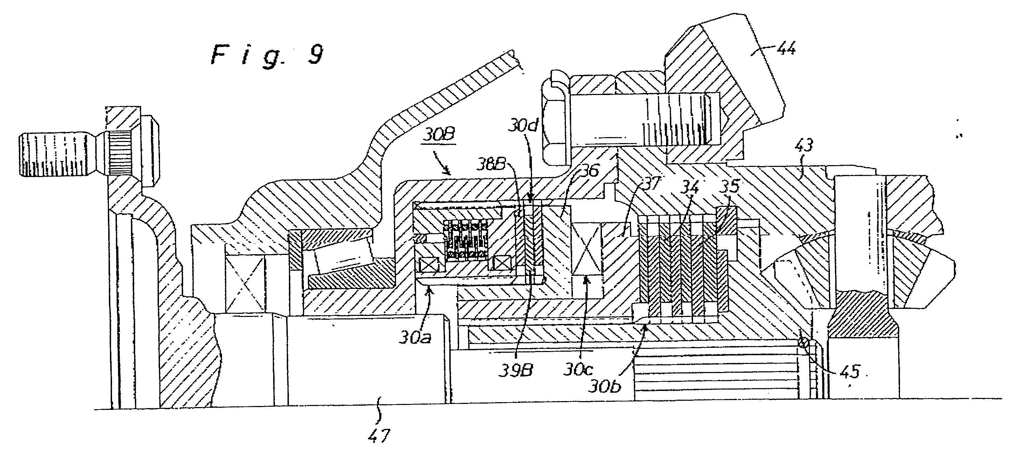

In Fig. 9, another modification of the viscous clutch assembly 30 is indicated at 30B, wherein a friction disc clutch 30d is disposed between the viscous coupling 30a and the cam mechanism 30c. The friction disc clutch 30d includes first clutch discs 38B splined at their outer periphery to the internally splined portion of differential case 43 and a second clutch disc 39B splined at its inner periphery to the externally splined sleeve portion of first cam member 36.

In operation, the first and second cam members 36 and 37 are oppositely thrusted by the resistance force acting on the first cam member 36 during relative rotation between the differential case 43 and side gear 45. Thus, the second cam member 37 acts to bring the clutch dics 34 into frictional engagement with the discs 35, while the first cam member 36 acts to bring the clutch dics 38B into frictional engagement with the clutch disc 39B. As a result, the first cam member 36 is drivingly connected to the differential case 43 through the disc clutch 30d to increase the thrust force acting on the clutch discs 34, 35 through the second cam member 37.

## Claims

1. A viscous clutch assembly adapted for installation in a torque transmission mechanism for effecting a drive connection between a pair of rotary members coaxially arranged for relative rotation, said viscous clutch assembly comprising first means (10a) for generating a viscous resistance force in response to relative rotation between said rotary members, second means (10c) cooperable with said first means for converting the viscous resistance force into a thrust force, and third means (10b) for generating a frictional engagement force in response to the thrust force applied thereto from said second means for establishing the drive connection between said rotary members.

2. A viscous clutch assembly as claimed in Claim 1, wherein said second means (10c) is disposed between said first and third means (10a, 10b) to apply the thrust force therefrom to said third means.

3. A viscous clutch assembly as claimed in Claim 1, wherein said first means (10a) is disposed between said second means (10c) and said third means (10b) to apply the thrust force from said second means to said third means therethrough.

4. A viscous clutch assembly as claimed in Claim 1, wherein said first means is a viscous coupling (10a) including a rotary plate (13) arranged for rotation with one of said rotary members (12) and a first cam member (14) rotatable with the other rotary member (11), said rotary plate being formed at one side thereof with a first set of concentrically spaced annular ribs (13a) which are coupled with a second set of concentrically spaced annular ribes (14a) formed on one side of said first cam member through a predetermined quantity of viscous fluid, wherein said second means is a cam mechanism (10c) including a second cam member (17) arranged for rotation with the other rotary member (11) and cooperable with said first cam member for generating a thrust force in response to relative rotation to said first cam member caused by a viscous resistance force acting thereon during relative rotation between said rotary plate and said first cam member, and wherein said third means is a multiple friction disc clutch (10b) including a first set of clutch discs (16) arranged for rotation with the one of said rotary members and a second set of clutch discs (15) arranged for rotation with the other rotary member (11) and interleaved with said first set of clutch discs to be brought into frictional engagement with the latter in response to the thrust force applied thereto from said second cam member of said cam mechanism.

5. A viscous clutch assembly as claimed in Claim 1, wherein said first means is a viscous coupling (30a) including an outer cylindrical drum (31) arranged for rotation with one of said rotary members, an inner sleeve member (32) rotatably coupled with said drum to form a viscous fluid chamber, a first set of coupling plates (33a) arranged for rotation with said drum in said viscous fluid chamber, and a second set of coupling plates (33b) arranged for rotation with said inner sleeve member and interleaved with said first set of coupling plates through a predetermined quantity of viscous fluid in said chamber, wherein said second means is a cam mechanism (30c) including a first cam member (36) coupled with said inner sleeve member for rotation therewith and a second cam member (37) arranged for rotation with the other rotary member and rotatably coupled with said first cam member for generating a thrust force in response to relative rotation to said first cam member caused by a viscous resistance force acting thereon during relative rotation between said drum and said inner sleeve member, and wherein said third means is a multiple friction disc clutch (30b) including a first set of clutch discs (34) arranged for rotation with the one of said rotary members and a second set of clutch discs (35) arranged for rotation with the other rotary member and interleaved with said first set of clutch discs to be brought into frictional engagement with the latter in response to the thrust force applied thereto from said second cam member of said cam mechanism.

6. A viscous clutch assembly as claimed in Claim 5, wherein the one of said rotary members is in the form of a differential case (43) and the other rotary member is in the form of a side gear (45) rotatably mounted within said differential case.

7. A viscous clutch assembly as claimed in Claim 5, wherein a friction disc clutch (30d) is disposed between said drum (31) of said viscous coupling and said first cam member (36).

8. A viscous clutch asembly as claimed in Claim 1, wherein said first means is a viscous coupling (30a) including an outer cylindrical drum (31) rotatable with one of said rotary members, an inner sleeve member (32) rotatably coupled with said drum to form a viscous fluid chamber and arranged for rotation with the other rotary member, a first set of coupling plates (33a) arranged for rotation with said drum in said viscous fluid chamber, and a second set of coupling plates (33b) arranged for rotation with said inner sleeve member and interleaved with said first set of coupling plates through a predetermined quantity of viscous fluid in said chamber, wherein said second means is a cam mechanism (30c) including a first cam member (36) arranged for rotation with the one of said rotary members and a second cam member (37) coupled with said drum of said viscous coupling for rotation therewith and rotatably coupled with said first cam member for generating a thrust force in response to relative rotation to said first cam member caused by a viscous resistance force acting thereon during relative rotation between said drum and said inner sleeve member, and wherein said third means is a multiple friction disc clutch (30b) including a first set of clutch discs (34) arranged for rotation with the one of said rotary members and a second set of clutch discs (35) arranged for rotation with the other rotary member and interleaved with said first set of clutch discs to be brought into frictional engagement with the latter in response to the thrust force applied thereto from said second cam member of said cam mechanism through said drum of said viscous coupling.

7

Fig. 1

EP 0 314 420 A1

Fig. 2

Fig. 3 (a)

Fig. 3 (b)

Fig. 3 (c)

Fig. 4

Fig. 5

Fig. 6

Fig. 7(a)

Fig. 7(b)

Fig. 8

EP 0 314 420 A1

Fig. 9

EP 0 314 420 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | WO-A-8 602 133 (ZAHNRADFABRIK FRIEDRICHSHAFEN) * Whole document * | 1,2,5,7 | F 16 D 35/00 B 60 K 17/35 |
| Y |  | 3,6 | |
| A |  | 8 | |
| Y | GB-A-1 411 283 (GKN TRANSMISSIONS LTD) * Pages 4,5; figure 5 * | 3,6 | |
| A |  | 1 | |
| X | DE-A-2 209 879 (GKN TRANSMISSIONS LTD) * Whole document * | 1,2,4 | |
| A |  | 3,5,6 | |
| Y | DE-A-3 609 419 (ZAHNRADFABRIK FRIEDRICHSHAFEN) * Whole document * | 3,5 | |
| A |  | 1,2 | |
| Y | DE-C-3 426 460 (UNI-CARDAN AG) * Whole document * | 6 | |
| X | US-A-4 058 027 (WEBB) * Whole document * | 1 | |
| Y |  | 3 | |
| Y | US-A-3 064 455 (GROS) * Whole document * | 3 | |

TECHNICAL FIELDS
SEARCHED (Int. Cl.4)

F 16 D 35/00
F 16 D 43/00
F 16 D 47/00
B 60 K

The present search report has been drawn up for all claims

| Place of search | Date of completion of the search | Examiner |
|---|---|---|
| THE HAGUE | 21-12-1988 | BALDWIN D.R. |